# EUROPÄISCHE PATENTANMELDUNG

(11) **EP 1 079 146 A1**
(43) Veröffentlichungstag der Anmeldung: **28.02.2001**
(21) Anmeldenummer: 00250112.0
(22) Anmeldetag: 04.04.2000
(51) Int. Cl.: F16H 31/00, B60N 2/235

(54) **In beide Drehrichtungen wirkender Ratschenantrieb für Verstellvorrichtungen**

(30) Priorität: 25.08.1999 DE 19941127
(71) Anmelder: Brose Fahrzeugteile GmbH & Co. KG Coburg, 96450 Coburg (DE)
(72) Erfinder: Schumann, Peter, 96253 Untersiemau (DE); Scheck, Georg, 96479 Weitramsdorf (DE)
(74) Vertreter: Baumgärtel, Gunnar

(57) **Zusammenfassung**

Die Erfindung betrifft einen beidseitig wirkenden Antrieb für Verstellvorrichtungen, mit einem schwenkbar gelagerten Antriebshebel (10) zur Erzeugung einer aus einer Nullpunktlage des Antriebshebels (10) in die eine oder andere Drehrichtung um eine Drehachse (20) erfolgenden Drehbewegung, einem Antriebsrad (30) und zumindest einem an dem Antriebshebel (10) angeordneten Kopplungselement (40a, 40b) mit Kopplungsbereichen (44a, 44b) zur Übertragung eines Drehmoments auf das Antriebsrad (30). Der Erfindung liegt das Problem zugrunde, einen Antrieb zur Verfügung zu stellen, der mit einer geringen Anzahl von Einzelteilen auskommt, einfach zu montieren ist und sich durch einen kompakten Aufbau auszeichnet. Das Problem wird dadurch gelöst, daß der Antriebshebel (10) auf der Drehachse (20) derart radial verschiebbar gelagert ist, daß dieser bei einer radialen Verschiebung vor der Übertragung einer Antriebsbewegung auf das Antriebsrad (30) zumindest ein in der Antriebsrichtung wirksames Sperrelement (50a, 50b) entgegen einer auf das Sperrelement (50a, 50b) wirkende Vorspannkraft entriegelt.

## Beschreibung

Die Erfindung betrifft einen beidseitig wirkenden Antrieb für Verstellvorrichtungen nach dem Oberbegriff des Anspruchs 1. Die Erfindung ist insbesondere für die Verstellung von Fahrzeugsitzkomponenten wie Sitzlehnen und Sitzkissen vorgesehen.

Aus der DE 195 27 912 A1 ist ein beidseitig wirkender Antrieb bekannt, bei dem ein Antriebshebel auf einer Antriebsachse gelagert ist und schwenkbare Kopplungselemente trägt, deren mit Verzahnungselementen versehene freie Enden mit der auf dem Umfang eines Antriebsrades angeordneten Verzahnung in Eingriff bringbar sind. Den schwenkbaren Kopplungselementen ist eine Kulissenführung zugeordnet, die je nach Schwenkrichtung des Antriebshebels das jeweils unbelastete Kopplungselement von der Verzahnung des Antriebsrades abhebt. Dabei sind beidseitig und außerhalb der Kulissenführung Federbereiche vorgesehen, die auf die Kopplungselemente eine entgegen der Einrastrichtung der Verzahnung gerichtete Kraft ausüben, wodurch sogenannte Ratschengeräusche vermieden werden.

In einem Gehäuse des Antriebes sind Klemmbacken angeordnet, die mittels Reibschluß die Weiterleitung eines abtriebsseitigen Momentes sperren.

Aufgrund des in einem gesonderten Gehäuse untergebrachten Sperrmechanismus ist ein relativ großer Bauraum erforderlich und der Antrieb weist eine große Teilezahl auf.

Ausgehend von diesem Stand der Technik liegt der Erfindung das Problem zugrunde, einen beidseitig wirkenden Antrieb zur Erzeugung einer Drehbewegung zur Verfügung zu stellen, der mit einer geringen Anzahl von Einzelteilen auskommt, einfach zu montieren ist und sich durch einen kompakten Aufbau auszeichnet.

Dieses Problem wird erfindungsgemäß durch einen beidseitig wirkenden Antrieb mit den Merkmalen des Anspruchs 1 gelöst.

Die erfindungsgemäße Lösung sieht vor, daß der Antriebshebel auf der Drehachse derart radial verschiebbar gelagert ist, daß dieser bei einer radialen Verschiebung, z.B. vor der Übertragung einer Antriebsbewegung auf das Antriebsrad, zumindest ein in der Antriebsrichtung wirksames Sperrelement, zumeist entgegen eine auf das Sperrelement wirkende Vorspannkraft, entriegelt.

In der Nullpunktlage des Antriebehebels sind sowohl die Kopplungselemente als auch das Sperrelement in Eingriff mit dem Antriebsrad und Verriegeln es gegen eine Drehbewegung. Durch die radiale Verschieblichkeit wird bewirkt, daß das Sperrelement außer Eingriff mit dem Antriebsrad gebracht wird und die Kopplungselemente die auf den Antriebshebel ausgeübte Kraft auf das Antriebsrad übertragen können.

Die Kopplungs- und Sperrelemente sind dabei formschlüssig mit dem Antriebsrad verbunden. Neben einer herkömmlichen Verzahnung, die beispielsweise gefräst oder gestanzt oder über Urformverfahren erzeugt wurde, ist eine Microverzahnung ebenfalls möglich.

Das Sperrelement ist in einer Ausgestaltung der Erfindung um eine Drehachse schwenkbar gelagert, wodurch mittels einer entsprechenden Hebelübersetzung durch kleine Verschiebebewegungen des Hebels relativ große Verlagerungen bzw. Drehbewegungen des Sperrelementes erzielt werden können. Grundsätzlich ist es jedoch auch vorgesehen, das Sperrelement oder die Sperrelemente längsverschieblich zu lagern, beispielsweise in einer geraden Führung oder in einer Kulissenführung. Bei einer Längsverschiebung ist eine Führungsfläche vorgesehen, an oder auf der das Sperrelement entlanggleitet.

Zur Erreichung eines möglichst kleinen Bauraumes und einer flachen Bauform ist der Antriebshebel einerseits drehbar bzw. schwenkbar um die Drehachse des Antriebsrades gelagert und andererseits parallel zu der Ebene des Antriebsrades, also im wesentlichen orthogonal zu der Drehachse verschiebbar gelagert. Durch die parallele Anordnung von Kopplungselementen und Sperrelement zu dem Antriebsrad, also die Anordnung von Antrieb und Bremse in im wesentlichen einer Ebene, baut der Antrieb sehr flach, was gerade bei den beengten Platzverhältnissen bei der Sitzverstellung vorteilhaft ist.

Um die Orientierung der Verschieberichtung des Antriebshebels bezüglich der Drehachse festzulegen, weist der Hebel eine Führung auf, die beispielsweise als ein Langloch ausgebildet ist. Je nach Ausgestaltung des Hebels und der Anordnung an der Drehachse sind andere Führungen möglich, beispielsweise die Ausbildung einer Nut oder Einfräsung, wenn der Hebel an einem Ende der Drehachse angeordnet ist.

In einer Variante der Erfindung weisen die Sperrelemente Kulissenführungen auf, die mit an dem Antriebshebel angeordneten Führungselementen in Verbindung stehen und ein präzises Abheben der Sperrelemente von dem Antriebsrad gewährleisten. Die Kulissenführungen sind beispielsweise als Langlöcher ausgebildet, in die Stifte eingreifen, die über entsprechende Ausleger mit dem Antriebshebel verbunden sind. Selbstverständlich können die Führungselemente auch an dem Sperrelement und die Kulissenführungen an dem Antriebshebel angebracht bzw.angeordnet sein.

Die Kulissenführungen sind dabei mit Vorteil dergestalt ausgebildet, daß bei einem Verschwenken des Antriebshebels aus der Nullpunktlage das wirksame Sperrelement aufgrund der Verschiebebewegung des Hebels orthogonal zu der Drehachse außer Wirkverbindung mit dem Antriebsrad gerät.

Um den steten Eingriff der Sperrelemente mit dem Antriebsrad zu gewährleisten, ist in einer Weiterbildung der Erfindung vorgesehen, die Sperrelemente über ein Federelement in Richtung auf das Antriebsrad zu belasten. Die Federelemente können dabei unterschiedliche Formen wie Blatt-, Zug-, Druck- oder Drehfeder aufweisen.

In einer Weiterbildung der Erfindung ist vorgesehen, daß das Kopplungselement schwenkbar auf dem Antriebshebel gelagert ist und über ein Federelement in der Nullpunktlage des Antriebshebels in einer Ausgangsposition gehalten wird. Die Ausgangsposition kann dabei, je nach Variante der Erfindung, eine Wirkverbindung des Kopplungselementes mit dem Antriebsrad oder eine Stellung des Kopplungselementes außer Eingriff mit dem Antriebsrad vorsehen.

Eine Variante des Erfindung sieht vor, daß das Kopplungselement einstückig ausgebildet ist und über das Federelement in der Nullpunktlage außer Wirkverbindung mit dem Antriebsrad gehalten wird. Dadurch ergibt sich eine Reduzierung der Teilezahl und eine leichte Beweglichkeit des Antriebshebels bis zum Eingriff des Kopplungselementes mit dem Antriebsrad. Das Federelement zur Gewährleistung der Ausgangsposition ist dabei vorteilhafterweise gehäusefest gelagert, wobei das Federelement als Schenkelfeder ausgebildet ist.

In einer ALternative ist vorgesehen, das Kopplungselement zweiteilig auszubilden und über ein oder mehrere Federelement(e) dergestalt zu belasten, daß die Kopplungsbereiche in der Nullpunktstellung des Antriebshebels mit dem Antriebsrad in Wirkverbindung stehen. Durch die bereits vorhandene Abstützung des Kopplungselementes auf dem Antriebsrad wird die translatorische Bewegung des Antriebshebels unmittelbar bei Betätigung des Hebels eingeleitet.

In einer Weiterbildung der Erfindung ist vorgesehen, daß an den Kopplungselementen Kulissenführungen angeordnet sind, die mit ortsfesten Führungselementen in Eingriff stehen, wobei die Kulissenführungen dergestalt ausgebildet sind, daß bei einem Verschwenken des Antriebshebels aus der Nullpunktlage das unbelastete Kopplungselement außer Wirkverbindung mit dem Antriebsrad gerät, damit das Kopplungselement beim Zurückdrehen das Antriebsrad mit zurücknimmt. In analoger Weise ist möglich, die Kulissenführungen ortsfest zu gestalten und die Kopplungselemente mit Führungselementen zu versehen.

Im Hinblick auf eine optimale Ausnutzung des Bauraumes ist in einer Weiterbildung das Antriebsrad als Hohlrad ausgebildet und die Sperrelemente sich drehbeweglich gelagert. Die Drehachsen der Sperrelemente und des Kopplungselementes sind innerhalb des Hohlrades angeordnet, so daß der Antrieb und die Bremse sich innerhalb des Antriebsrades befinden und diese die äußeren Abmessungen festlegt.

Alternativ dazu können die Drehachsen der Sperrelemente und der Kopplungselemente außerhalb des Antriebsrades angeordnet sein, was insbesondere dann zweckmäßig ist, wenn das Antriebsrad eine Außenverzahnung aufweist, die in der Regel einfacher und kostengünstiger herzustellen ist. Denkbar ist selbstverständlich eine Kombination von Innen- und Außenverzahnung des Antriebsrades und dementsprechend eine Anordnung der Drehachsen und der Sperr- und Kopplungselemente innerhalb und außerhalb des Antriebsrades.

Die Kopplung von Antriebsrad mit den Sperr- und Kopplungselementen erfolgt zweckmäßigerweise über eine Wirkverbindung einer auf dem Antriebsrad angeordneten Verzahnung mit entsprechenden Kopplungsbereichen der Sperr- und Kopplungselemente.

Um Rattergeräusche bei einer Bewegung in Richtung des Abtriebsmomentes zu verhindern, ist eine zusätzliche Bremseinrichtung vorgesehen, die in einer Ausgestaltung der Erfindung als eine Schlingfederbremse ausgebildet ist, deren Achse sich im wesentlichen mit der Achse des Antriebsrades deckt. Auf diese Weise wird nur ein geringer Bauraum für die zusätzliche Bremseinrichtung benötigt und der Antrieb baut weiterhin sehr flach.

Die sogenannten Überholgeräusche werden dadurch vermieden, daß die Bremsfeder der Schlingfederbremse das abtriebsseitige Überschußmoment, also das Bruttomoment abzüglich der Reibung, zumindest kompensiert.

Anhand von in der Zeichnung dargestellten Ausführungsbeispielen soll der der Erfindung zugrundeliegende Gedanke näher erläutert werden. Es zeigen:
- Figur 1 -: eine Schnittansicht eines Antriebes mit innenliegenden Sperr- und Kopplungselementen;
- Figuren 1a bis 1d -: Darstellung des Ablaufs eines Verstellvorganges;
- Figur 2 -: einen Antrieb gemäß Figur 1 mit einer Bremseinrichtung;
- Figur 3 -: einen Antrieb mit Kulissenführungen in den Sperrelementen und einem einteiligen Kopplungselement sowie
- Figur 4 -: einen Antrieb mit außenliegenden Sperr- und Kopplungselementen.

Gleiche Bauteile in unterschiedlichen Figuren sind mit den gleichen Bezugszeichen versehen. Aus Gründen der Übersichtlichkeit sind nicht in allen Figuren alle Bezugszeichen aufgeführt.

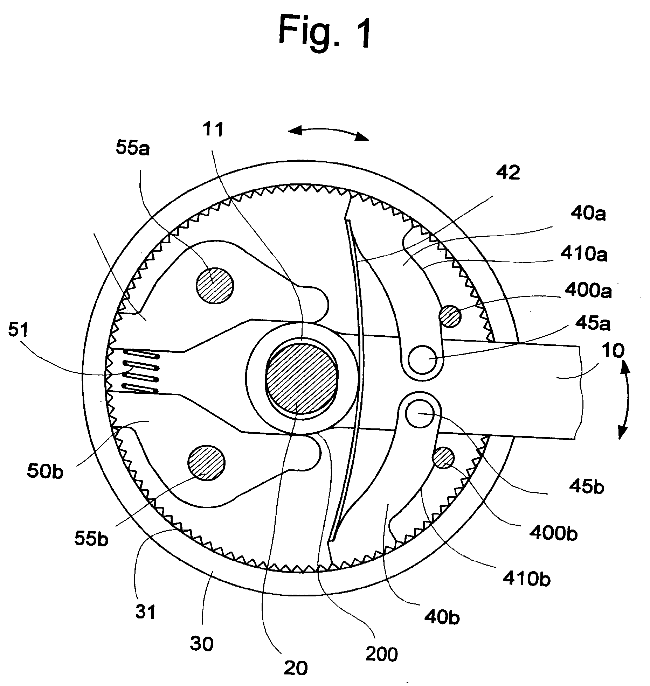

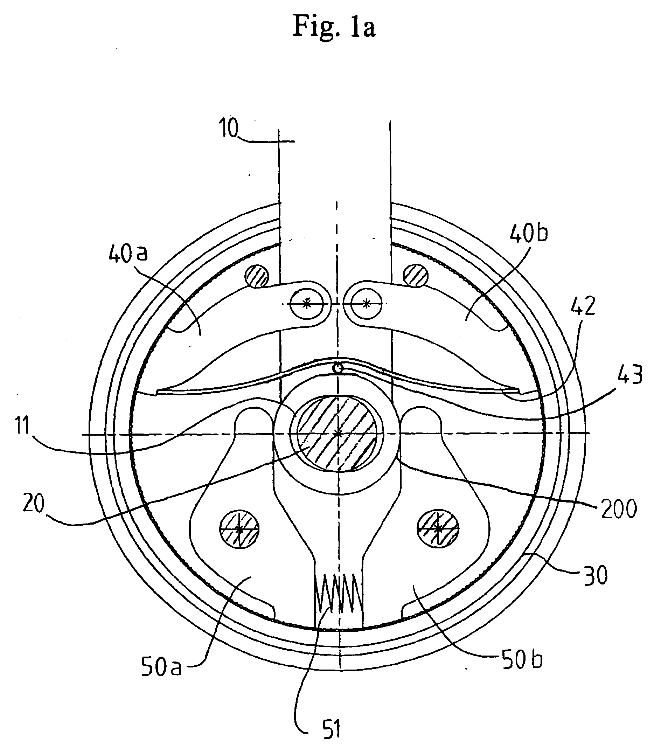

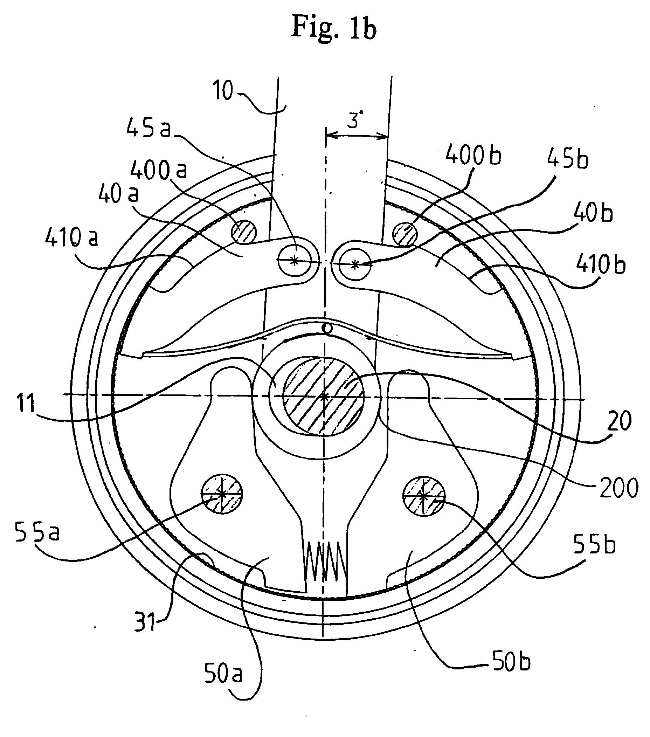

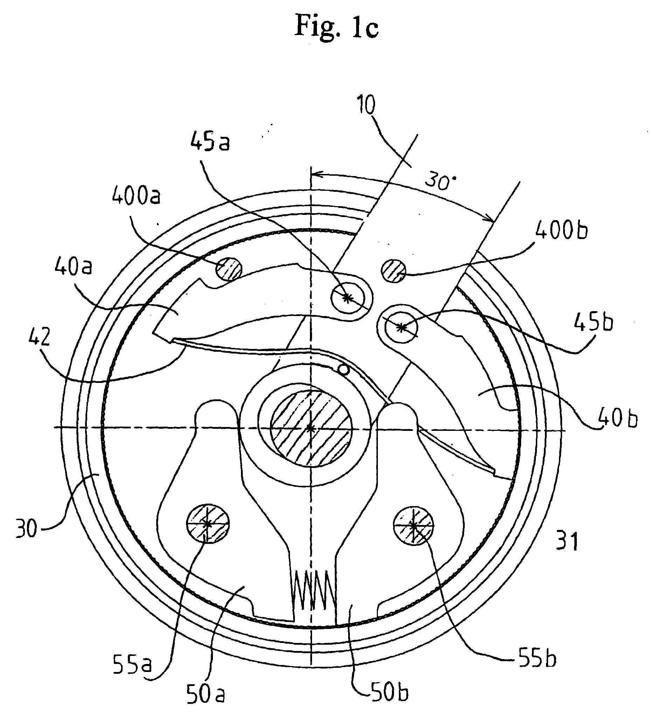

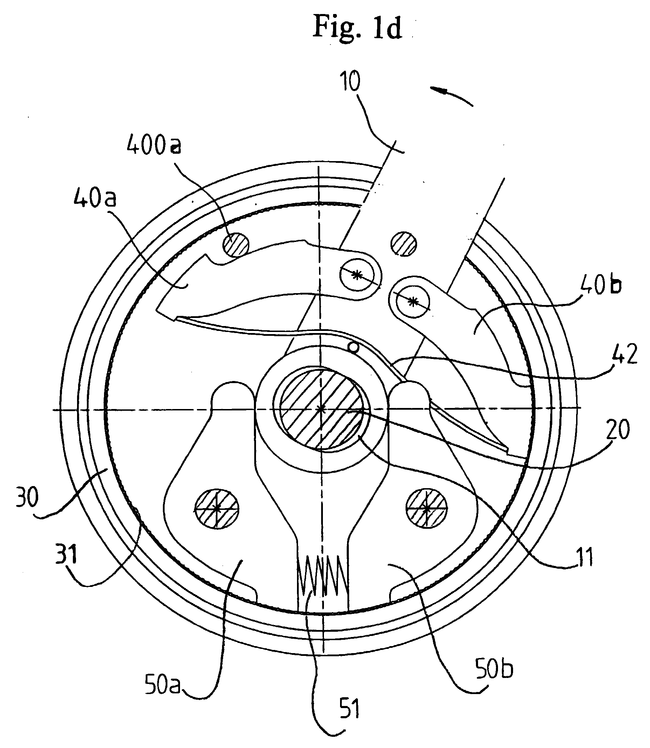

Figur 1 zeigt einen beidseitig wirkenden Antrieb mit einem Antriebshebel 10 zur Erzeugung einer Drehbewegung eines Antriebsrades 30 in eine der beiden Drehrichtungen, wie durch die Doppelpfeile angedeutet ist. Der Antriebshebel 10 ist ebenso wie das Antriebsrad 30 auf einer gehäusefesten Drehachse 20 drehbeweglich gelagert, wobei eine Begrenzung des Dreh- bzw. Schwenkbereiches des Antriebshebels 10 vorgesehen sein kann. Die Drehachse 20 stellt gleichzeitig die Antriebsachse des Antriebes dar. Das Antriebsrad 30 ist als Hohlrad ausgebildet und weist eine Innenverzahnung 31 auf, in die entsprechende Verzahnungen bzw. Kopplungsbereiche von Kopplungselementen 40a, 40b und Sperrelementen 50a, 50b eingreifen.

Die Kopplungselemente 40a und 40b sind dreh- bzw. schwenkbar um die Drehachsen 45a und 45b auf dem Antriebshebel 10 gelagert und werden über ein Federelement 42 in Richtung der Innenverzahnung 31 des Antriebsrades 30 belastet. Das Federelement 42 ist als eine Blattfeder ausgebildet und stützt sich einerseits an den Kopplungselementen 40a und 40b und andererseits an der Achsenaufnahme des Antriebshebels 10 ab. Durch das Federelement 42 ist gewährleistet, daß sich in der Ausgangsposition bzw. Nullage des Antriebshebels 10 die Kopplungselemente 40a bzw. 40b in Eingriff bzw. in Wirkverbindung mit der Innenverzahnung 31 des Antriebsrades 30 befinden.

Die Kopplungselemente 40a und 40b stehen in Kontakt mit Führungselementen 400a und 400b, die ortsfest, beispielsweise in einem nicht dargestellten Gehäuse, gelagert sind. Diese Führungselemente 400a bzw. 400b sind als stabförmige Elemente mit einer überwiegend runden Querschnittsform ausgebildet, können aber auch eine davon abweichende Querschnittsform aufweisen. Die Führungselemente 400a bzw. 400b sind zweckmäßigerweise dergestalt dimensioniert, daß eine Schwenkbewegung des Antriebshebels 10 nicht behindert wird bzw. sind sie so angeordnet oder dimensioniert, daß sie neben der Führungsfunktion für die Kopplungselemente 40a und 40b eine Anschlagbegrenzung für den Verstellweg des Antriebshebels 10 bilden. Die Führungselemente 400a und 400b stehen mit Kulissenführungen bzw. Führungsflächen 410a und 410b der Kopplungselemente 40a und 40b in Kontakt und bewirken bei Betätigung des Antriebshebels 10 eine Drehung des jeweils unbelasteten Kopplungselementes um die entsprechende Drehachse relativ zu dem Antriebshebel 10. Die Funktion und Wirkungsweise der Führungselemente 400a und 400b sowie der Führungsflächen 410a und 410b bzw. Kulissenführungen werden weiter unten ausführlich erläutert.

Ebenfalls an ortsfesten Drehachsen 55a und 55b sind Sperrelemente 50a und 50b gelagert, die jeweils als ein Doppelhebel ausgebildet sind, deren eine Hebelseite mit der Innenverzahnung 31 in Wirkverbindung steht und deren anderes Hebelende an dem Antriebshebel 10 anliegt. Zwischen den der Innenverzahnung 31 zugewandten Hebelenden ist eine Feder 51 angeordnet, die die Hebelenden der Sperrelemente 50a und 50b auseinanderdrückt, so daß ein steter Eingriff der Sperrelemente 50a und 50b mit der Innenverzahnung 31 gewährleistet ist. Durch die Federbelastung werden gleichzeitig die dem Antriebshebel 10 zugewandten Hebelenden an die äußere Achsaufnahme 200 des Antriebshebels 10 gedrückt, wodurch dieser in einer stabilen Position gehalten wird.

Der Antriebshebel 10 ist um die Drehachse 20 sowohl drehbeweglich als auch zu ihr längsverschieblich gelagert, wobei die Verschieblichkeit nur in einer Ebene orthogonal zu der Drehachse 20, also in der Zeichenebene gegeben ist. Zur Begrenzung der Verschieblichkeit des Antriebshebels 10 ist die innere Achsaufnahme als ein Langloch 11 ausgebildet, das in Quererstreckung im wesentlichen dem Durchmesser der Drehachse 20 entspricht. Durch die federbelasteten Sperrelemente 50a und 50b sowie durch die ebenfalls federbelasteten Kopplungselemente 40a und 40b wird der Antriebshebel 10 in einer Ausgangsposition gehalten, bei der der Antriebshebel 10 dergestalt gehalten wird, daß das Langloch 11 beiderseits der Antriebsachse 10 ein geringes seitliches, translatorisches Spiel aufweist.

Das Zusammenwirken der beschriebenen Elemente wird anhand von Darstellungen verschiedener Phasen der Verstellung des Antriebes anhand der Figuren 1a bis 1d erläutert.

Der Antrieb in den Figuren 1a bis 1d entspricht im wesentlichen dem Aufbau des Antriebes gemäß Figur 1 und unterscheidet sich lediglich in der Form des Federelementes 42 sowie in der Ausbildung des Kontaktbereiches des Federelementes 42 mit der äußeren Achsaufnahme 200 des Antriebshebels 10, die in der Variante der Figuren 1a bis 1d über ein stabförmiges, mit einem runden Querschnitt versehenen Zwischenstück 43 hergestellt wird.

Die Figur 1a zeigt einen Antrieb in einer Ausgangsposition, bei der der Antriebshebei 10 sich in einer Nullpunktlage befindet, bei der die Kopplungselemente 40a und 40b sowie die Sperrelemente 50a und 50b mit der Innenverzahnung 31 des Antriebsrades 30 in Wirkverbindung stehen. Durch die Federbelastung der Sperrelemente 50a und 50b durch die Feder 51 und die Vorspannung der Kopplungselemente 40a und 40b über das Federelement 42 wird der Antriebshebel 10 dergestalt zentriert, daß beiderseits der Drehachse 20 die als Langloch 11 ausgebildete innere Achsaufnahme ein Spiel aufweist.

In der Figur 1b ist ein leicht nach rechts verschwenkter Antriebshebel 10 gezeigt, der aufgrund des Spieles in dem Langloch 11 und der Abstützung über das Kopplungselement 40b um eine Drehachse 45b verschwenkt. Diese Verschwenkung bewirkt einerseits, daß die rechte Seite des Langloches 11 an der Drehachse 20 anliegt und dadurch das Sperrelement 50a aufgrund der Drehung um die Drehachse 55a außer Eingriff mit der Innenverzahnung 31 des Antriebsrades 30 gebracht wird. Die Anlage der rechten Seite des Langloches 11 bewirkt weiterhin, daß der Kontakt des antriebshebelseitigen Hebelendes des Sperrelementes 50b mit dem Antriebshebel 10 aufgehoben wird.

Der Antriebshebel 10 stützt sich somit mit der rechten Seite des Langloches 11 an der Drehachse 20 und über das Kopplungselement 40b an dem Antriebsrad 30 ab und bewirkt somit eine Drehung des Antriebsrades 30. Das dieser Drehbewegung im Uhrzeigersinn entgegenwirkende Sperrelement 50a ist aufgrund der tanslatorischen Verschiebung des unteren Endes des Antriebshebels 10 bzw. aufgrund der Drehung des Antriebshebels 10 um die Drehachse 45b außer Eingriff mit dem Antriebsrad 30 gebracht, so daß es keine Sperrwirkung ausüben kann. Das Sperrelement 50b sperrt nur eine Drehbewegung entgegen dem Uhrzeigersinn und gleitet bei einer Drehbewegung des Antriebsrades 30 im Uhrzeigersinn auf der Innenverzahnung 31 entlang.

Neben einer Verschwenkung des Antriebshebels 10 um die Drehachse 45b, mit der Folge, daß das Sperrelement 50a von der Innenverzahnung 31 abgehoben wird und somit keine Bremswirkung hinsichtlich einer abtriebsseitigen Belastung vorliegt, findet zusätzlich eine Verkippung der Drehachse 45a um die Drehachse 45b statt. Dies hat zum einen die Folge, daß die Drehachse 45a sowohl nach rechts als auch nach oben in Richtung der Innenverzahnung 31 bewegt wird. Die Kulissenführung bzw. die Führungsfläche 410a gleitet dabei auf dem Führungselement 400a entlang und hebt aufgrund der Kontur des Kopplungselementes 40a dieses von der Innenverzahnung 31 ab. In der Figur 1b ist gezeigt, wie das Kopplungselement 40a gerade von der Innenverzahnung 31 abgehoben wird.

In der Figur 1c ist der Antrieb in einer Auslenkung des Antriebshebels 10 um 30° zu der Nullpunktlage dargestellt. In dieser Figur ist zu erkennen, daß die Drehachsen 55a, 55b und die Führungselemente 400a und 400b ortsfest geblieben sind. Das Sperrelement 50b steht immer noch in Kontakt mit der Innenverzahnung 31, übt jedoch keine Sperr- bzw. Bremswirkung aus, da das verzahnungsseitige Hebelende des Sperrelementes 50b bei einer Drehung des Antriebsrades 30 im Uhrzeigersinn ebenfalls im Uhrzeigersinn verkippt werden kann, so daß die Verzahnung 31 an dem entsprechenden Kontaktbereich des Sperrelementes entlanggleiten kann. Eine Sperrwirkung des Sperrelementes 50b tritt nur dann auf, wenn eine Drehbewegung entgegen dem Uhrzeigersinn durch das Antriebsrad 30 erfolgt, indem die Innenverzahnung 31 den Kontaktbereich des Sperrelementes 50b entgegen dem Uhrzeigersinn mitnimmt und dadurch eine Verkeilung und Sperrung der Drehbewegung über das Sperrelement 50b und die Drehachse 55b erfolgt.

In der Figur 1c ist weiterhin sehr gut zu erkennen, daß das Sperrelement 50a weiterhin von der Innenverzahnung 31 abgehoben ist, ebenso wie das Kopplungselement 40a, das von dem Führungselement 400a entgegen der Federbelastung durch das Federelement 42 von der Innenverzahnung wegbewegt wird. Das Federelement 42 bewirkt ein ständiges Anliegen des Kopplungselementes 40a an dem Führungselement 400a und verhindert dadurch ein Abheben des Kopplungselementes 40a von dem Führungselement 400a.

In der Figur 1d ist die Phase gezeigt, in der der Antriebshebel 10 in Richtung des Pfeiles in die Ausgangslage zurückbewegt bzw. losgelassen wird. Durch den Wegfall der durch den Antriebshebel 10 aufgebrachten Antriebskraft wird der Antriebshebel 10 durch die beiden Sperrelemente 50a und 50b auf der Drehachse 20 zentriert, d.h., daß das Langloch 11 beiderseits der Drehachse 20 ein im wesentlichen gleichgroßes Spiel aufweist. Die Zentrierung wird dadurch bewirkt, daß aufgrund der Kraft, die durch die Feder 51 zwischen den Sperrelementen 50a und 50b besteht, das Sperrelement 50a in Uhrzeigerrichtung gedreht wird und damit den Antriebshebel 10 entgegen dem Uhrzeigersinn um die Drehachse 45b dreht. Dadurch wird gleichzeitig das Langloch nach rechts verschoben, so daß eine Zentrierung des Antriebshebels 10 stattfindet. Das Sperrelement 50b wirkt dabei aufgrund seines Eingriffs mit der Innenverzahnung 31 als Widerlager und stützt somit die Feder 51 gegenüber dem Sperrelement 50a ab. In der in der Figur 1d gezeigten Stellung sind beide Sperrelemente 50a und 50b in Eingriff mit der Innenverzahnung 31, so daß durch Aufbringen einer abtriebsseitigen Kraft keine Verstellung der Verstellvorrichtung, beispielsweise einer Sitzlehne, erfolgen kann.

Der Antriebshebel 10 wird in die Ausgangsposition gemäß der Figur 1a zurückgeführt, wobei die Führungsfläche des Kopplungselementes 40a auf dem Führungselement 400a entlanggleitet, wodurch das Kopplungselement 40a außer Eingriff mit der Innenverzahnung 31 gehalten wird und somit die Rückstellbewegung nicht behindert. Das Kopplungselement 40b gleitet federbelastet durch das Federelement 42 auf der Innenverzahnung 31 entlang, wird jedoch über die Verzahnung hinweggehoben, da eine Bewegung des Antriebsrades 30 entgegen der Uhrzeigerrichtung durch das Sperrelement 50b verhindert wird. Sobald der Antriebshebel 10 in seiner Ausgangsposition, also die Nullpunktlage erreicht hat, sind sowohl beide Sperrelemente 50a und 50b als auch beide Kopplungselemente 40a und 40b im Eingriff mit der Innenverzahnung 31 des Antriebsrades 30. Bei der Rückstellbewegung des Antriebshebels 10 in die Nullpunktlage bewegt sich das Antriebsrad 30 nicht.

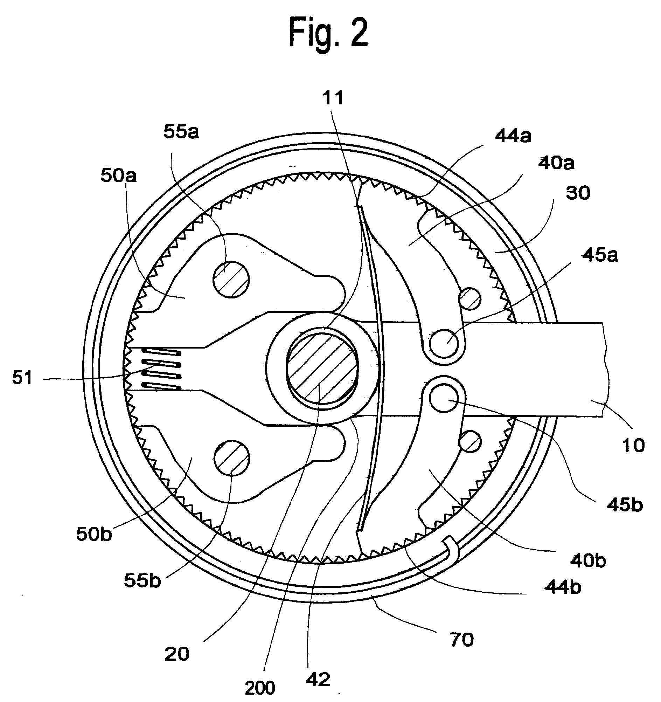

In der Figur 2 ist ein Antrieb gemäß der Figur 1 dargestellt, jedoch ist hier zusätzlich eine Bremseinrichtung 70 in Gestalt einer Schlingfederbremse dargestellt, die ein Durchrutschen des Antriebsrades 30 bei Aufhebung der Bremswirkung beim Abheben der Sperrelemente 50a, 50b und gleichzeitigem Aufbringen eines abtriebsseitigen Momentes verhindert.

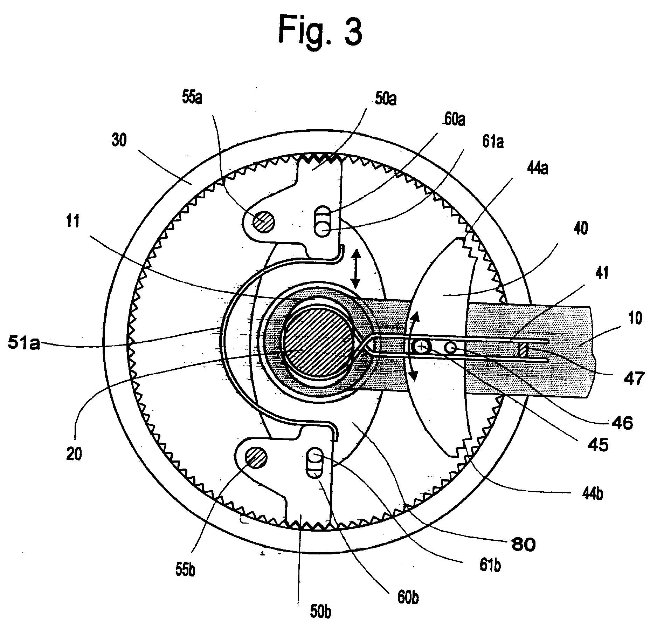

In der Figur 3 ist eine Variante der Erfindung dargestellt, bei der das Kopplungselement 40 einteilig als eine auf dem Antriebshebel 10 um eine Drehachse 45 gelagerte Wippe ausgebildet ist. Die Drehachse 45 sowie das Kopplungselement 40 ist wie bei den Antrieben gemäß den Figuren 1 und 2 innerhalb eines innenverzahnten Hohlrades 30 gelagert.

Zwischen der Drehachse 45 und der Innenverzahnung 31 ist auf dem Kopplungselement 40 ein Mitnehmer 46 angeordnet, der aus der Zeichenebene herausragt und zwischen den Schenkeln einer Schenkelfeder 41 angeordnet ist. Die Schenkelfeder 41 ist einerseits um die Drehachse 20 geschwungen und andererseits stützen sich die Schenkel an einem gehäusefesten Anschlag 47 ab. In der dargestellten Nullpunktlage des Antriebshebels 10 befinden sich die Kopplungsbereiche 44a und 44b des Kopplungselementes 40 nicht im Eingriff mit der Innenverzahnung 31 des Antriebsrades 30 und werden in dieser Position durch die Schenkelfeder 41 gehalten. Der Antriebshebel 10 selbst weist wie in den Figuren 1 und 2 eine als Langloch 11 ausgebildete Drehachsenaufnahme auf und wird in einer Position, in der das Langloch 11 beiderseits der Drehachse 20 Spiel aufweist über die federbelasteten Sperrelemente 50a und 50b gehalten.

Die Sperrelemente 50a und 50b sind schwenkbar um gehäusefeste Drehachsen 55a bzw. 55b gelagert und weisen Kulissenführungen 60a und 60b auf, in die Führungselemente 61a und 61b eingreifen. Die Kulissenführungen 60a und 60b sind als Langlöcher ausgebildet, in die die Führungselemente 61a und 61b eingreifen. Die Querschnitte der Führungselemente 61a und 61b sind in der dargestellten Variante mit einer runden Querschnittsform versehen und auf einer ovalen Trägerplatte 80 befestigt, die mit dem Antriebshebel 10 gelenkig bzw. drehbar verbunden ist. Zwischen den Sperrelementen 50a und 50b ist eine Blattfeder 51a angeordnet, die die Sperrelemente 50a und 50b in Richtung der Innenverzahnung 31 des Antriebsrades 30 belastet. In der dargestellten Position des Antriebes sind beide Sperrelemente 50a und 50b im Eingriff mit der Innenverzahnung 31 und sperren so eine abtriebsseitig aufgebrachte Kraft.

In den Sperrelementen 50a und 50b sind die Kulissenführungen 60a und 60b dergestalt ausgebildet, daß in der Nullpunktlage des Antriebshebels 10 die Führungselemente 61a und 61b jeweils an dem der Drehachse zugewandten Ende der Kulissenführung 60a bzw. 60b anliegen, wodurch gewährleistet ist, daß das Langloch 11 der Achsenaufnahme des Antriebshebels 10 zu beiden Seiten der Drehachse 20 ein Spiel aufweist. Dieses beiderseitige Spiel ermöglicht eine begrenzte Längsverschiebung des Antriebshebels 10 parallel zu der Ebene des Antriebsrades 30 bzw. parallel zu der Zeichenebene, was bewirkt, daß aufgrund der Anlage der Führungselemente 61a und 61b an dem jeweiligen der Drehachse 20 zugewandten Ende der Führungskulissen eine entsprechende Drehbewegung der Sperrelemente 50a bzw. 50b bewirkt wird. Die Feder 51a stellt sicher, daß die Sperrelemente gegen das jeweilige Führungselement 61a, 61b belastet werden, so daß einerseits eine beliebige Einbaulage ohne Rücksicht auf die Schwerkraft gewählt werden kann und andererseits eine präzise Betätigung der Sperrelemente gewährleistet ist.

Bei einer Betätigung des Antriebshebels 10 im Uhrzeigersinn wird der Antriebshebel 10 zunächst um einen Drehpunkt verschwenkt, der durch die Achse 20 gebildet wird. Dabei wird das Kopplungselement 40 über die Achse 45 mitbewegt, während der Mitnehmer 46 durch die Schenkelfeder 41 an einer Mitnahme gehindert wird. Dadurch dreht sich das Kopplungselement 40 entgegen der Uhrzeigerrichtung und tritt über den Kopplungsbereich 44b mit der Innenverzahnung 31 in Kontakt, indem die Zähne in die Innenverzahnung 31 eingreifen. Bei weiterer Belastung des Antriebshebels 10 stützt sich dieser über das Kopplungselement 40 in der Innenverzahnung 31 ab und will das Antriebsrad 30 in Richtung des Uhrzeigersinns drehen, was das Sperrelement 50b verhindert. Erst wenn die aufgebrachte Kraft am Betätigungshebel 10 so groß ist, daß über die ovale Trägerplatte 80 mit dem Führungselement 61b das Sperrelement 50b gegen die im Vergleich zu der Schenkelfeder 41 stärker vorgespannte Feder 51a bewegt werden kann, schwenkt die Verzahnung des Sperrelementes 50b aus der Innenverzahnung 31 des Antriebsrades 30 heraus und das Antriebsrad 30 kann bewegt werden.

Nach Beendigung der Verstellbewegung wird aufgrund der durch die Feder 51a aufgebrachten Kraft das Sperrelement 50b sofort in Richtung der Innenverzahnung 31 bewegt, wodurch die Sperr- bzw. Bremswirkung der Sperrelemente 50a und 50b in beiden Drehrichtungen wiederhergestellt ist, so daß eine kraftabhängige Verriegelungssteuerung erfolgt. Aufgrund der ständigen Anlage des Sperrelementes 50a an der Innenverzahnung 31 war die Sperrwirkung hinsichtlich einer Drehung entgegen dem Uhrzeigersinn stets gegeben.

Ebenfalls wird durch die Rückstellung der Sperrelemente 50a und 50b durch die Feder 51a bewirkt, daß das Langloch 11 des Antriebshebels 10 wieder symmetrisch zu der Drehachse 20 ausgerichtet ist, also beiderseits der Drehachse 20 ein begrenztes Spiel aufweist.

Weiterhin wird, sobald keine Antriebskraft mehr auf den Antriebshebel 10 ausgeübt wird, der Antriebshebel 10 durch die Rückstellkraft der Schenkelfeder 41 auf den Mitnehmer 46 in seiner Ausgangsposition zurückgestellt.

Die Reihenfolge der Schaltabläufe der Sperrelemente 50a und 50b und des Kopplungselementes 40 ist dabei abhängig von der jeweiligen Federrate der Federn 51a und 41. In dem oben beschriebenen Ausführungsbeispiel weist die Feder 51a eine höhere Federrate als die Schenkelfeder 41 auf, so daß die Sperrelemente 50a und 50b bei Nachlassen der Verstellkraft stets vor dem Kopplungselement 40 bewegt werden. Dadurch wird erreicht, daß stets eine Verriegelung des Antriebes gegen abtriebsseitig eingeleitete Kräfte gegeben ist, wenn das Kopplungselement 40 bei einer Rückstellbewegung des Antriebshebels 10 von der Innenverzahnung 31 abgehoben wird. Grundsätzlich ist es aber auch möglich, die Schenkelfeder 41 stärker als die Feder 51a auszulegen, um die Reihenfolge der Schaltung von Sperr- und Kopplungselementen zu verändern. Für diesen Fall ist eine zusätzliche Bremsvorrichtung vorzusehen, die ein Durchrutschen des Antriebes bei abtriebsseitig aufgebrachten Kräften während des Schaltvorganges verhindert. Die Reihenfolge der Schaltvorgänge ist variabel und hängt von der Abstimmung der Federraten der Federn 41 und 51a ab.

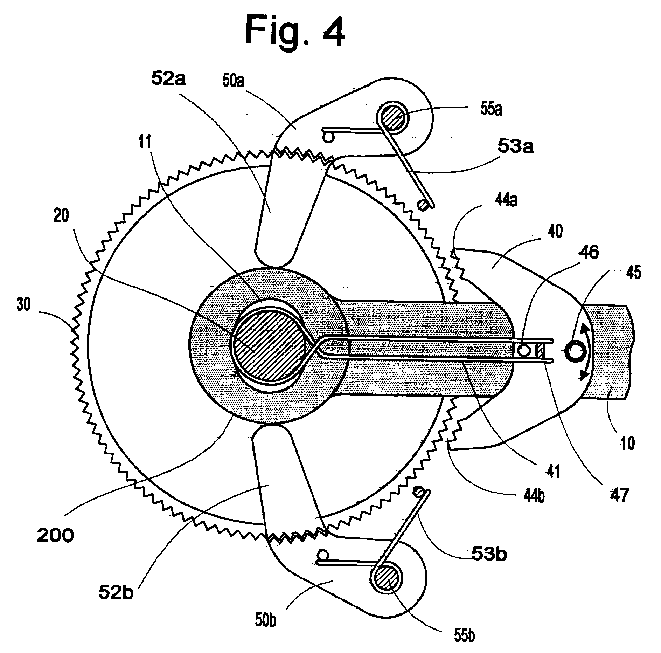

Die Figur 4 zeigt eine Variante des Antriebes mit einem außenverzahnten Antriebsrad 30 sowie mit zwei Sperrelementen 50a und 50b, deren Drehachsen 55a und 55b außerhalb des Radiusses des Antriebsrades 30 angeordnet sind. Ebenfalls außerhalb des Radiusses des Antriebsrades 30 ist auf dem Antriebshebel 10 ein einteiliges, als Wippe ausgebildetes Kopplungselement 40 drehbar um eine Drehachse 45 gelagert. Zwischen der Drehachse 45 des Kopplungselementes 40 und der Drehachse 20 des Antriebshebels 10 bzw. des Antriebsrades 30 ist auf dem Kopplungselement 40 ein Mitnehmer 46 angeordnet, der zwischen zwei Schenkeln einer Schenkelfeder 41 angeordnet ist. Die Schenkelfeder 41 stützt sich an einem ortsfesten, vorzugsweise an einem nicht dargestellten Gehäuse angeordneten Anschlag 47 ab. Die Schenkelfeder 41 ist analog zu der Schenkelfeder 41 gemäß Figur 3 ausgebildet, ebenso wie das Langloch 11 der Achsenaufnahme des Antriebshebels 10.

Auf dem Antriebshebel 10 stützen sich die Sperrelemente 50a und 50b über Ausleger 52a und 52b ab, wobei die äußere Kontur der Achsenaufnahme des Antriebshebels 10 wie in den anderen Figuren kreisförmig ausgebildet ist. Die Sperrelemente 50a und 50b sind über je eine Feder 53a und 53b in Richtung auf die Außenverzahnung des Antriebsrades 30 belastet und zentrieren über die Ausleger 52a und 52b den Antriebshebel 10 bzw. das Langloch 11 der Achsenaufnahme entsprechend den vorgeschriebenen Figuren.

Die Funktionsweise des Antriebes gemäß der Figur 4 entspricht im wesentlichen der Funktionsweise des Antriebes gemäß der Figur 3 und bedarf keiner ausführlichen Beschreibung.

Den anhand der Figuren beschriebenen Antrieben ist gemein, daß der Antrieb und die Bremse, also das Kopplungselement und die Sperrelemente im wesentlichen in einer Ebene liegen, wodurch die Antriebe sehr flach bauen.

## Patentansprüche

1. Beidseitig wirkender Antrieb für Verstellvorrichtungen, insbesondere für Fahrzeugsitze, mit
a) einem schwenkbar gelagerten Antriebshebel (10) zur Erzeugung einer aus einer Nullpunktlage des Antriebshebels (10) in die eine oder andere Drehrichtung um eine Drehachse (20) erfolgenden Drehbewegung,
b) einem Antriebsrad (30) und
c) zumindest einem an dem Antriebshebel (10) angeordneten Kopplungselement (40; 40a, 40b) mit Kopplungsbereichen (44a, 44b) zur Übertragung eines Drehmoments auf das Antriebsrad (30),
**dadurch gekennzeichnet,**
daß der Antriebshebel (10) auf der Drehachse (20) derart radial verschiebbar gelagert ist, daß dieser bei einer radialen Verschiebung zumindest ein in der Antriebsrichtung wirksames Sperrelement (50a, 50b) entriegelt.

2. Antrieb nach Anspruch 1, **dadurch gekennzeichnet**, daß das Sperrelement (50a, 50b) mit einer Vorspannkraft belastet ist, entgegen der der Antriebshebel (10) das Sperrelement (50a, 50b) vor der Übertragung einer Antriebsbewegung auf das Antriebsrad (30) entriegelt.

3. Antrieb nach Anspruch 1 oder 2, **dadurch gekennzeichnet**, daß das Sperrelement (50a, 50b) um eine Drehachse (55a, 55b) schwenkbar gelagert ist.

4. Antrieb nach Anspruch 1 oder 2, **dadurch gekennzeichnet**, daß das Sperrelement (50a, 50b) an einer Führungsfläche verschiebbar gelagert ist.

5. Antrieb nach einem der voranstehenden Ansprüche, **dadurch gekennzeichnet**, daß der Antriebshebel (10) drehbar um die Drehachse (20) des Antriebsrades (30) und parallel zu der Ebene des Antriebsrades (30) verschiebbar gelagert ist.

6. Antrieb nach Anspruch 5, **dadurch gekennzeichnet**, daß der Antriebshebel (10) eine Führung (11) aufweist, die die Orientierung der Verschiebung des Antriebshebels (10) zu der Drehachse (20) festlegt.

7. Antrieb nach Anspruch 6, **dadurch gekennzeichnet**, daß die Führung als Langloch (11) ausgebildet ist.

8. Antrieb nach Anspruch 1 oder 2, **dadurch gekennzeichnet**, daß die Sperrelemente (50a, 50b) Kulissenführungen (60a, 60b) aufweisen, die mit an dem Antriebshebel (10) oder auf einer um die Drehachse (20) drehbar gelagerten Trägerplatte (80) angeordneten Führungselementen (61a, 61b) in Verbindung stehen.

9. Antrieb nach einem der Ansprüche 1 bis 7, **dadurch gekennzeichnet**, daß am Antriebshebel (10) oder auf einer um die Drehachse (20) drehbar gelagerten Trägerplatte (80) Kulissenführungen angeordnet sind, in denen an den Sperrelementen (50a, 50b) angeordnete Führungselemente geführt sind.

10. Antrieb nach Anspruch 8 oder 9, **dadurch gekennzeichnet**, daß die Kulissenführungen (60a, 60b) dergestalt ausgebildet sind, daß bei einem Verschwenken des Antriebshebels (10) aus der Nullpunktlage das wirksame Sperrelement (50a; 50b) außer Wirkverbindung mit dem Antriebsrad (30) gerät.

11. Antrieb nach mindestens einem der voranstehenden Ansprüche, **dadurch gekennzeichnet**, daß die Sperrelemente (50a, 50b) in Richtung auf das Antriebsrad (30) federbelastet sind.

12. Antrieb nach mindestens einem der voranstehenden Ansprüche, **dadurch gekennzeichnet**, daß das Kopplungselement (40; 40a, 40b) schwenkbar auf dem Antriebshebel (10) gelagert ist und über ein Federelement (41; 42) in der Nullpunktlage des Antriebshebels (10) ebenfalls in einer Ausgangsposition gehalten wird.

13. Antrieb nach Anspruch 12, **dadurch gekennzeichnet**, daß das Kopplungselement (40) einstückig ausgebildet ist und über das Federelement (41) in der Nullpunktlage außer Wirkverbindung mit dem Antriebsrad (30) gehalten wird.

14. Antrieb nach Anspruch 13, **dadurch gekennzeichnet**, daß das Federelement (41) gehäusefest gelagert ist.

15. Antrieb nach Anspruch 13 oder 14, **dadurch gekennzeichnet**, daß das Federelement als Schenkelfeder (41) ausgebildet ist.

16. Antrieb nach Anspruch 12, **gekennzeichnet durch** ein zweiteiliges Kopplungselement (40a, 40b), das über das Federelement (42) dergestalt belastet ist, daß die Kopplungsbereiche (44a, 44b) in der Nullpunktstellung des Antriebshebels (10) mit dem Antriebsrad (30) in Wirkverbindung stehen.

17. Antrieb nach Anspruch 16, **dadurch gekennzeichnet**, daß an den Kopplungselementen (40a, 40b) Kulissenführungen oder Führungsflächen (410a, 410b) angeordnet sind, die mit ortsfesten Führungselementen (400a, 400b) in Eingriff stehen, wobei die Kulissenführungen oder Führungsflächen (410a, 410b) dergestalt ausgebildet sind, daß bei einem Verschwenken des Antriebshebels (10) aus der Nullpunktlage das unbelastete Kopplungselement (40a; 40b) außer Wirkverbindung mit dem Antriebsrad (30) gerät.

18. Antrieb nach mindestens einem der voranstehenden Ansprüche, **dadurch gekennzeichnet**, daß das Antriebsrad (30) als Hohlrad ausgebildet ist, wobei die Drehachsen (55a, 55b; 45, 45a, 45b) der Sperrelemente (50a, 50b) und des Kopplungselementes (40; 40a, 40b) innerhalb des Hohlrades angeordnet sind.

19. Antrieb nach einem der Ansprüche 1 bis 17, **dadurch gekennzeichnet**, daß die Drehachsen (55a, 55b; 45; 45a, 45b) der Sperrelemente (50a, 50b) und des Kopplungselementes (40; 40a, 40b) bei einer Außenverzahnung des Antriebsrades (30) außerhalb des Antriebsrades (30) angeordnet sind.

20. Antrieb nach mindestens einem der voranstehenden Ansprüche, **dadurch gekennzeichnet**, daß die Sperrelemente (50a, 50b) und die Kopplungselemente (40; 40a, 40b) im wesentlichen in einer Ebene mit dem Antriebsrad (30) angeordnet sind.

21. Antrieb nach mindestens einem der voranstehenden Ansprüche, **dadurch gekennzeichnet**, daß das Antriebsrad (30) mit einer Bremseinrichtung (70) versehen ist, die bei einer Entkopplung des wirksamen Sperrelementes (50a; 50b) und gleichzeitiger abtriebsseitiger Belastung ein Durchrutschen des Antriebsrades (30) verhindert, wenn antriebsseitige und abtriebsseitige Belastungen gleichgerichtet sind.

22. Antrieb nach Anspruch 21, **dadurch gekennzeichnet**, daß die Bremseinrichtung als eine Schlingfederbremse (70) ausgebildet ist, deren Achse sich im wesentlichen mit der Achse des Antriebsrades (30) deckt.
